# EUROPEAN PATENT SPECIFICATION

(11) **EP 3 793 750 B1**
(45) Date of publication and mention of the grant of the patent: **19.08.2026**
(21) Application number: 19804403.4
(22) Date of filing: 14.05.2019
(51) Int. Cl.: B05D 1/02, C09D 183/08, E04F 13/08

(54) **ORGANOSILANE COATING COMPOSITIONS**
ORGANOSILANBESCHICHTUNGSZUSAMMENSETZUNGEN
COMPOSITIONS DE REVÊTEMENT ORGANOSILANE

(30) Priority: 14.05.2018 US 201862671138 P
(43) Date of publication of application: 24.03.2021
(73) Proprietor: Henkel AG & Co. KGaA, 40589 Düsseldorf (DE)
(72) Inventor: ZHANG, Bong, June, Chestnut Hill, MA 02467 (US); ALTINOK, Esra, Arlington, MA 02476 (US); CATCHINGS, Perry, L., Sr., Roxbury, MA 02119 (US)
(74) Representative: Tomkins & Co
(86) International application number: PCT/US2019/032228
(87) International publication number: WO 2019/222223

(56) References cited:
- US-A- 5 756 209
- US-A1- 2003 194 553
- US-A1- 2008 125 539
- US-A1- 2014 363 667
- US-B2- 8 318 885
- US-B2- 9 316 906
- US-B2- 9 428 605
- TIAN ET AL.: "Attapulgite Modified with Silane Coupling Agent for Phosphorus Adsorption and Deep Bleaching of Refined Palm Oil", ADSORPTION SCIENCE & TECHNOLOGY, vol. 32, no. 1, 2014, pages 37 - 48, XP055654938
- HOYLE ET AL.: "Photopolymerization of 1,6-Hexanediol Diacrylate: The Effect of Functionalized Amines", POLYMER, vol. 29, no. 1, 1988, pages 18 - 23, XP024120256, DOI: 10.1016/0032-3861(88)90194-2
- PAINT AND COATINGS INDUSTRY (PCI): "Crosslinking Technology for Fast-Curing, High-Performance, Low-VOC Coatings", PCI MAGAZINE, PAINT AND COATINGS INDUSTRY, 1 October 2001 (2001-10-01), XP055654943, Retrieved from the Internet <URL:www.pcimag.com/articles/86518-crosslinking-technology-for-fast-curing-high-performance-low-voc-coatings>

## Description

### FIELD

The present invention relates to organosilane compositions. Preferred compositions can provide a strong outer coating layers for a variety of substrate surfaces.

### BACKGROUND

Substrates having treated surface layers are used in various fields. For example, in the transportation industry, such as automobiles, ships, aircrafts, and the like, surfaces of an exterior parts, such as outer panels, window glass, rear view camera lens, or mirror glass, or interior parts, such as a display surface material, an instrument panel, or other articles, are desired to be easily cleaned and to maintain their surface integrity. In the electronics industry, treated surfaces are used in mobile phones, electronic device displays, and the like. And in the building construction and home design industries, treated surfaces are used on windows, doors, decorative panels, furniture, and appliances, such as refrigerators, ovens, ranges, and the like. In the retail segment, treated surfaces are found in athletic wear, shoes and the like.

In particular, electronic devices often are treated with protective coatings to reduce scratch and other abrasion damage. For instance, displays used on mobile devices such as phones and tablets generally include glass or plastic lens elements. Certain coating systems have been reported to treat such lens elements to reduce abrasion damage. See US2016/0085370.

Patent document US 2014/363667 relates to a silicone curable coating composition used as pressure-sensitive adhesive and comprising a an alkoxysilane crosslinking agent having isocyanate, epoxy or peroxide groups and wherein the cure may be carried out by heat or photoradiation. The composition is then applied on a substrate.

Patent document US 2003/194553 describes a sizing composition for glass strands consisting of a solution comprising at least one component having at least one acrylic and/or methacrylic functional group and at least one component having a primary and/or secondary amine functional group. The composition is used for coating glass strands and the coated glass strands are then used in the preparation of composites. In particular, a composition comprises a polyester tetraacrylate, γ-methacryloxypropyltrimethoxysilane and γ-glycidoxypropyltrimethoxysilane. The composition is cured in presence of a curing agent comprising a diamine compound.

Finally, patent document US 2008/125539 describes a moisture-curable binder composition comprising a silane-modified polyurethane and a silane-modified acrylate polymer. The composition is used as sealant, adhesives or in coating systems such as paints.

It would be desirable to have new coating systems.

### SUMMARY

We now provide new organosilane compositions. Preferred compositions can be used as coating layers on a wide variety of substrates, including as permanent surface coatings. Particularly preferred compositions can exhibit notable hardness as well as substantial flexibility.

For many applications, we recognized the need for a permanent coating layer that is both hard and flexible.

We have now surprising found that preferred compositions disclosed herein can provide cured coating layers that exhibit both significant hardness and flexibility. See, for instance, the results set forth in the Examples which follow.

The coating compositions comprise (i) one or more organosilanes comprising one or more siloxanes, and/or one or more silsesquioxanes comprising units of the following Formula (I) and/or (II) below. and (ii) one or more compounds comprising a substituted acrylate moiety, a substituted acrylamide moiety or a substituted vinyl ether moiety.

The organosilanes include polymeric materials that comprise siloxane repeat units of the following Formulae (I) and (II): 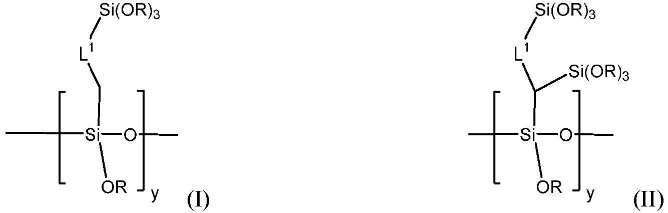 wherein in each of those Formulae (I) and (II), L¹ is a linker such as a chemical bond, optionally substituted alkylene e.g. (-CH₂-)₁₋₈; or optionally substituted heteroalkylene e.g. - (CH₂W)₁₋₈ where W is N, O or S; each R is independently a hydrogen or non-hydrogen substituent such as optionally substituted alkyl; and y is a positive integer.

Preferred organosilanes for use in the present compositions also include higher order polymeric materials that comprise 2, 3, 4, 5 or more distinct repeat units, i.e. copolymers, terpolymers, tetrapolymers, pentapolymers and other higher order materials.

As discussed, in addition to an organosilane, the present compositions comprise one or more compounds that comprise a substituted acrylate moiety, a substituted acrylamide moiety and/or a substituted vinyl ether moiety. Compounds that comprise one or more hydroxy acrylate groups are generally preferred.

**In** particularly preferred aspects, the present composition can be applied on a substrate as a fluid coating without use of a separate casting solvent. Thus, for example, the organosilane component may be dissolved or dispersed together with the component that comprises one or more substituted acrylate, acrylamide or vinyl ether groups. The fluid composition can applied by any suitable means, e.g. dip, spin or spray coated, onto a substrate followed by curing without need for a separate step of solvent removal.

In certain preferred embodiments, the one or more organosilanes do not include fluorine substitution. In particular aspects, the coating composition is at least substantially free of fluorine, i.e. less than 3, 2, 1 or 0.5 weight percent fluorine based on total composition weight.

In certain aspects, the one or more organosilanes of a coating composition may comprise a polyhedral oligomeric silsesquioxane (POSS) moiety. In other aspects, the one or more organosilanes do not include any POSS moieties.

In particular aspects, the present coating compositions may include one or more additional materials, such as one or more antimicrobial agents that can provide an applied composition coating layer that is substantially microbe-free or microbe-resistant. Additional preferred additives include one or more colorants or fluorescent agents that can provide desired visible characteristics to an applied layer of the coating compositions.

The present compositions may be used advantageously on a wide range of substrates such as glass, plastics, wood, cellulosic products, metal surfaces such as aluminum, steel, brass, and surfaces with various types of applied coatings including paints. The coating system is especially applicable to various polymeric substrates such as polycarbonate, polystyrene, polyester. The substrates may be for example a display including for a mobile device.

In certain aspects, a composition layer will be the outermost surface layer on a substrate. That is, in such aspects, additional layers are not coated over a layer of a present coating composition.

In particular aspects, an applied composition coating layer, including following curing, will be substantially transparent, for example the coating layer will transmit 60, 70, 80, 90% or more of incident visible light.

As discussed, preferred hardened or cured coating layers of the present compositions can exhibit significant hardness such as at least 4H, 5H or 6H on a cPI (polyimide) film substrate and/or at least 7H, 8H or 9H on a glass substrate. Hardness values as referred to herein may be determined using the ASTM D3363 Standard test method as exemplified in Example 6 which follows. Such hardness values are preferably provided with relatively thin composition coating layers, for example cured composition coating layers having a thickness of 50-400 nm or 100-300 nm.

Preferred hardened or cured coating layers of the present compositions also can exhibit significant flexibility. For instance, preferred cured composition layers (including cured composition coating layers having a thickness of < 1 µm) will exhibit either no detected or no notable or significant delamination or cracking by a Static Bending Test as exemplified in Example 5 which follows. As referred to herein, no notable or significant degradation or cracking indicates no intended performance of the coating layer is compromised.

That Static Bending Test as referred to herein includes: 1) folding a cured composition coating layer (the composition coated on a foldable substrate such as the polyimide of Example 5 which follows, the cured composition layer having a thickness of < 1 µm) at 180°; 2) storing such folded samples at 70°C and -40°C for at least 3 days; and 3) after such storage periods, examining the coating layers visually and with a microscope for degradation such as delamination or cracking.

Methods are also provided for providing a coating composition layer. Substrates such as a mobile device or a display element are further provided having coated thereon a composition of the invention.

Other aspects of the invention are discussed infra.

### BRIEF DESCRIPTION OF DRAWING

FIGS. 1A-1B show ASTM D3359 standard test methods for rating adhesion by tape test cross cut with 1 mm² grid (FIG. 1A) and 50 times magnification (FIG. 1B).
FIGS. 2A-2B show static bending test results.
FIG. 3 shows a schematic test setup for pencil hardness. Inset shows chip and nick free edge of lead.
FIG. 4 shows a schematic pencil hardness test result of the specimen coated on glass.

### DETAILED DESCRIPTION

### Organosilanes

As discussed, organosilanes include polymeric materials that comprise siloxane repeat units, including repeat units that comprise bis-and tris- units of the following Formulae (I) and (II): 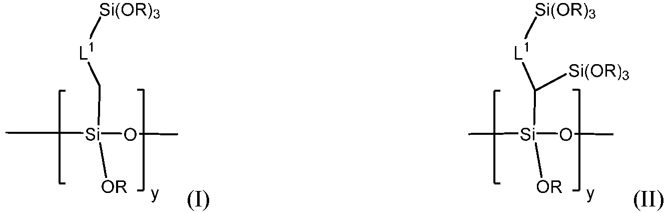 wherein in each of those Formulae (I) and (II):
each R is independently a hydrogen or non-hydrogen substituent such as optionally substituted alkyl e.g. optionally substituted C₁-C₁₂, C₁-C₈, C₁-C₄ or C₁-C₂ alkyl;
L¹ is a linker group such as a chemical bond, optionally substituted alkylene, e.g, optionally substituted C₁-C₁₂, C₁-C₈, C₁-C₄ or C₁-C₂ alkylene, or optionaly substituted heteroalkylene, e.g., 2-10 membered, 2-8 membered, 2-4 membered or 2-3 membered heteroalkylene; and
y is a positive integer.

Particularly preferred are organosilanes that comprise one or more units of the above Formulae (I) and/or (II) and further include carbamate substitution. For instance, in preferred aspect, organosilanes may comprise a structure of either the following Formulae (IIIA) or (IIIB): 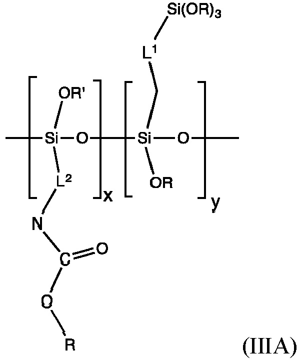 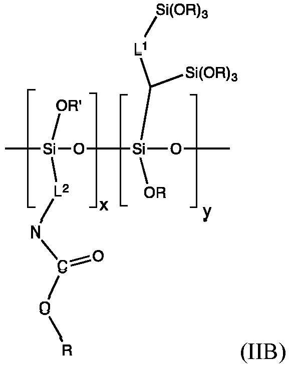 wherein in Formulae (IIIA) and (IIIB), L1, L² R, R', x and y are the same as defined in Formulae I, II and III above.

Suitable organosilanes are commercially available or can be readily prepared. For instance, one or more silanols or silyl ethers can be reacted to provide a suitable organosilane. Preferred polymeric materials such as those of Formulae (IIIA) and (IIIB) may be readily synthesized in accordance with the following Scheme 1:

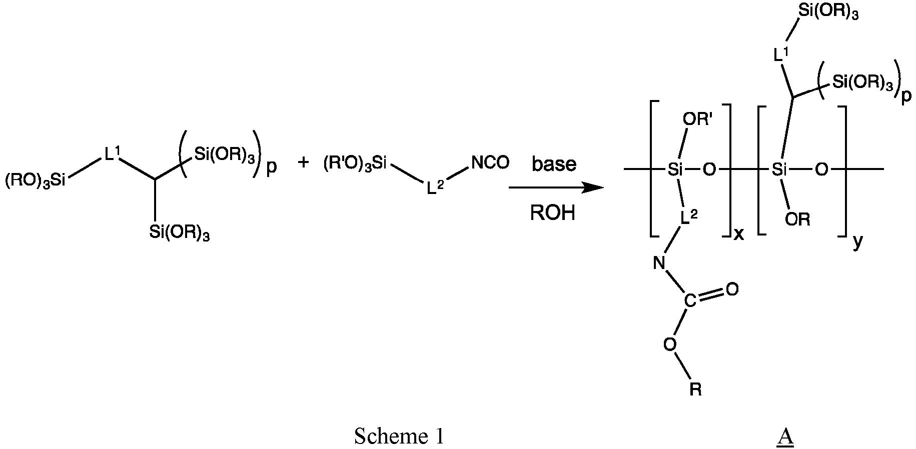

As depicted in Scheme 1, a bis- or tris-silanol or silylether is reacted with a isocyano- silanol or silyl ether reagent under basic conditions to provide the depicted copolymer A. In that Scheme 1, each R and R' are independently hydrogen or a non-hydrogen substituent such as optionally substituted alkyl e.g, optionally substituted C₁-C₁₂, C₁-C₈, C₁-C₄ or C₁-C₂ alkyl. L¹ and L² are the same or different linker groups such as a chemical bond, optionally substituted alkylene, e.g, optionally substituted C₁-C₁₂, C₁-C₈, C₁-C₄ or C₁-C₂ alkylene, or optionally substituted heteroalkylene, e.g., 2-10 membered, 2-8 membered, 2-4 membered or 2-3 membered heroealkylene; x and y are the same or different positive integers, for example x and y each suitably may be 1 to 100; and p is 0 (to provide a bis-compound such as a group of Formula (I) above) or 1 (to provide a tri-compound such as a group of Formula (II) above).

Preferably, each R and R' are each independently hydrogen, or unsubstituted C₁-C₄ alkyl, e.g, methyl and ethyl. Preferably, L¹ and L² are independently each a bond, unsubstituted C₁-C₄ alkylene, e.g., methylene or etheylene.

Organosilanes used in the present coating composition may suitably vary widely in molecular weight and polydispersity. Suitable organosilanes include those that have a M_{w} of from about 300 to about 10,000, more typically about 300 to about 20,000 with a molecular weight distribution of about 3 or less, more typically a molecular weight distribution of about 2 or less.

References herein to "acrylate" groups or compounds is inclusive of where the acrylate vinyl group is substituted by an optionally substituted C₁₋₈alkyl or other group. Thus, the term acrylate includes methacrylates.

The term "alkylene," by itself or as part of another substituent, means, unless otherwise stated, a divalent radical derived from an alkyl, as exemplified, but not limited by, -CH₂CH₂CH₂CH₂-. Typically, an alkyl (or alkylene) group will have from 1 to 24 carbon atoms, or more typically 1-12, 1-8 or 1-4 carbon atoms.

The term "heteroalkylene," by itself or as part of another substituent, means, unless otherwise stated, a divalent radical derived from heteroalkyl, as exemplified, but not limited by, -CH₂-CH₂-O-CH₂-CH₂- and -CH₂-O-CH₂-CH₂-NH-CH₂-. For heteroalkylene groups, heteroatoms (N,O, S) can also occupy either or both of the chain termini (e.g., alkyleneoxy, alkylenedioxy, alkyleneamino, alkylenediamino, and the like).

As discussed herein, various materials and substituents (including groups of Formulae (I), (II), (III), (IIIA) and (IIIB) which may be "optionally substituted" may be suitably substituted at one or more available positions by e.g. halogen (F, Cl, Br, I); cyano; nitro; hydroxy; amino; alkyl such as C₁₋₂₀ alkyl or C₁₋₈ alkyl; alkenyl such as C₂₋₈ alkenyl; alkylamino such as C₁₋₂₀alkylamino or C₁₋₈ alkylamino; thioalkyl such as C₁₋₂₀ athioalkyl or C₁₋₈ thioalkyl; carbocyclic aryl such as phenyl, naphthyl, benzyl, etc; and the like.

### Coating compositions

As discussed above, the one or more organosilanes are used in combination with one or more distinct compounds that comprise a substituted acrylate moiety, a substituted acrylamide moiety or a substituted vinyl ether moiety.

In certain aspects, preferred components that comprise a substituted acrylate, acrylamide or vinyl ether moiety may be non-polymeric (no repeat units) and/or have a molecular weight of less than 1500, or less than 1000, 800, 700, 600 500 or 400. In the other aspects, a polymeric material may be suitable.

Specific components that comprise a substituted acrylate, acrylamide or vinyl ether moiety include for example 2-hydroxyethyl methacrylate: hydroxymethyl methacrylate, hydroxypropyl methacrylate, 2-aminoethyl methacrylate, glycidyl methacrylate, poly(ethylene glycol)methacrylate, 2-isocyanatoethyl methacrylate; N-hydroxyethyl acrylamide; N-(2-hydroxyethyl) methacrylamide; N-(hydroxymethyl)methacrylamide; N-(hydroxymethyl)acrylamide; 2-aminoethylmethacrylamide; 4-hydroxybutyl vinyl ether. In certain aspects, hydroxy acrylates (includes hydroxyl methacrylate sand other hydroxyl alkylacrylates) are preferred.

A further preferred composition component that comprises a substituted acrylate, acrylamide or vinyl ether moiety includes compounds that comprise multiple acrylate groups (a multi-acrylate compound) such as diacrylate and triacrylate compounds for example 1,6-hexanediol diacrylate, 1,6-hexanediol dimethacrylate: 1,3- butanediaol diacrylate, 1,4-butanediol diacrylate, 1,6-hexanediol diacrylate, poly(ethylene glycol) diacrylate, glycerol 1,3-diglycerolate diacrylate, and bisphenol A ethoxylate diacrylate.

A preferred acrylate material that may contain multiple acrylate groups for use in the present compositions is dipentaerythritol penta-/hexa-acrylate acrylate (DPPHA or DPHA)

In particular aspects, multiple distinct compounds that comprise a substituted acrylate, acrylamide or vinyl ether moiety are used in combination. For example, in certain aspects, a multi-acrylate compound is used in combination with one or more other distinct compounds such as one or more compounds that comprise a single substituted acrylate, acrylamide or vinyl ether moiety. For certain aspects, preferred is use of a multi-acrylate compound together with a distinct compound that comprise a single acrylate group such as a hydroxyl acrylate compound.

The additional composition component that comprises a substituted acrylate, acrylamide or vinyl ether group can suitably react to harden an applied coating composition layer. In preferred aspects, the additional component will react to form covalent bonds (crosslink) with composition components which may include the one or more organosilanes.

Such hardening of an applied coating composition suitably may occur with thermal treatment or exposure to activating radiation. The coating composition may include a curing agent to promote the hardening reaction, for example a thermal curing agent that may generate an active agent at elevated temperatures, or a photoinitiator compound that promotes curing agent upon exposure to activating radiation. In certain aspects, use of a photoinitiator compound is preferred together with blanket exposure to ultraviolet or other activating radiation at room or elevated temperature.

A variety of thermal and radiation-sensitive curing agents may be employed. Suitable photoinitiators include organic agents such as for example 2-hydroxy-2-methylpropiophenone: Irgacure^{™}, Drocur^{™}, 4,4'- Bis(diethylamino)benzophenone, Benzopheone, 2-chlorothioxantheri-9-one, 2-hydroxy-2-methylpropiophenone, 3-hydroxybenzophenone, and 4'-ethoxyacetophenone.

The present coating compositions also may contain other materials. For example, other optional additives include nanoparticles such as SiO₂, TiO₂, Al₂O₃, Al(OH)₃, ZnO, Sb₂O₃, Fe₂O₃, CeO₂, etc. Such optional additives typically will be present in minor concentration in a composition.

Preferred additional coating compositions agents include antimicrobial agents that can provide a coating layer that is substantially free of bacteria or other microbes. Antimicrobial agents can be both inorganic and organic materials. See the examples which follow for preferred agents and amounts for use in a coating composition.

Preferred additional coating compositions agents include microbe-and/or one or more colorants or fluorescent agents to provide desired visible characteristics to an applied layer of the coating compositions. Colorants also may be organic or inorganic materials. See the examples which follow for illustrative colorant agents.

Composition components suitably may be present in varying amounts. For instance, the weight ratio 1) the one or more organosilanes the 2) one or more compounds that comprise one or more substituted acrylate, acrylamide or vinyl ether moieties suitably may be 1:10 to 10:1, more typically, a weight ratio of 2:8 to 8:2 or 3:7 to 7:3. In certain aspects, a weight ratio of 1) the one or more organosilanes the 2) one or more compounds that comprise one or more substituted acrylate, acrylamide or vinyl ether moieties suitably may be 4:6 to 6:4.

A curing agent if employed typically will be present in relatively minor amounts such as less than 10, 5, 4, 3, 2 or 1 weight percent of the total composition weight.

A multi-acrylate compound if employed typically will be present in relatively minor amounts such as less than 10, 5, 4, 3, 2, or 1 weight percent of the total composition weight. As discussed, preferred compositions do not include an additional solvent component, rather reactive composition components are dissolved or dispersed together to provide a fluid solution or mixture. If desired, however, one or more carrier solvents may be utilized to impart desired viscosity and other characteristics to the composition. One or more organic solvents are generally preferred such as for example glycol ethers such as 2-methoxyethyl ether (diglyme), ethylene glycol monomethyl ether, and propylene glycol monomethyl ether; propylene glycol monomethyl ether acetate; lactates ethyl lactate; propionates such as ethyl ethoxy propionate and methyl-2-hydroxy isobutyrate; and ketones such as methylethyl ketone and 2-heptanone. A blend of solvents such as a blend of two, three or more of the solvents described above may be suitable. If utilized, a solvent component may be suitably present in the composition in an amount of from 50 to 90 or 95 wt% based on the total composition weight

The present compositions are generally prepared by admixing the composition components followed by agitation such as mechanical stirring or ultrasonication to provide a substantially uniform fluid composition. A composition may be applied to a substrate by any suitable method, including spin coating, spray coating or dip coating.

Following applying a composition coating layer on a substrate, the layer is hardened as discussed typically either by thermal treatment of exposure to ultraviolet or other activating radiation. In one aspect, the coating later is blanket exposed to ultraviolet radiation for 0.5 to 10 minutes or until the coating layer is hardened as desired. Radiation curing may be at room temperature or elevated temperature such as 30 to 80°C or more as may be desired to effectively harden a specific composition.

### Surfaces and Applications

There is no particular restriction as to the substrate to which the present compositions may be applied, For example, substrates include leather, metal, plastic, glass, ceramic or other inorganic materials, organic materials, or a combination thereof, such as composite materials, laminated materials, and the like. Further, the surface of the substrate may be the substrate surface itself, or may be the surface of a material different from the substrate surface, such as the coating surface of a coated metal plate, or the surface of a surface-treated layer of surface-treated glass. With respect to the shape of the substrate, it may not necessarily be a flat plate, and it may have an optional shape depending upon the particular purpose, such as the one having a curvature over the entire surface or at a part thereof, such as in a mobile phone screen having rounded edges for a full edge-to-edge screen.

For the surface treatment of the substrate, no special pretreatment is required. However, pretreatment may be conducted as the case requires. For example, acid treatment with e.g. diluted hydrofluoric acid or hydrochloric acid, alkali treatment with e.g. an aqueous sodium hydroxide solution, or discharge treatment by e.g. plasma irradiation, may be conducted.

In the present invention, a particularly suitable substrate is a substrate made of a transparent material such as leather, glass or plastic, and a suitable article having such a substrate mounted to utilize the transparency. Thus, the substrate of the present invention is particularly suitable for articles for transportation equipment and articles for buildings or building decorations.

Articles for transportation include, but are not limited to, exterior parts such as outer plates, window glass, mirrors and display panels, and interior parts such as instrument panels of cars, buses, trucks, automobiles, ships or aircraft. Such an article may be composed solely of the surface-treated substrate or may have the surface-treated substrate incorporated therein. For example, the former may be a window glass for an automobile, such as a windshield, and the latter may be a side mirror for an automobile in which a glass mirror is incorporated into a housing unit mounted on the exterior of the automobile.

The articles for use in transportation include vehicle bodies, window glass, such as windshield, side windows, rear window, and sunroof, mirrors, and leather upholsteries, such as seat, covers, padding, and the like for use in automobiles, buses or trucks, ships, and aircraft.

Further, articles for buildings or building decorations may be articles to be attached to buildings or articles already attached to buildings, or articles for buildings which are not attached to buildings but which are used in buildings, articles for buildings include, but are not limited to, furniture or equipment, and base materials, such as glass plates.

Specifically, they include window glass plates, window glass, glass plates for roofs, glass plates for doors or doors having such glass plates installed, glass plates for partitions, glass plates for green houses, or green houses having such glass plates, transparent plastic plates to be used instead of glass, the above-mentioned various articles for buildings (window materials and roof materials) having such plastic plates incorporated, wall materials made of ceramics, cement, metals or other materials, mirrors, furniture and display shelves having such walls or mirrors, and glass for showcases.

Such an article may be made of the surface treated substrate alone or may be the one having the surface treated substrate incorporated therein. For example, the former may be a window glass plate, and the latter may be furniture in which a glass mirror is incorporated.

The following examples are illustrative of the invention.

### EXAMPLE 1: Synthesis of Bis-CoPolymer

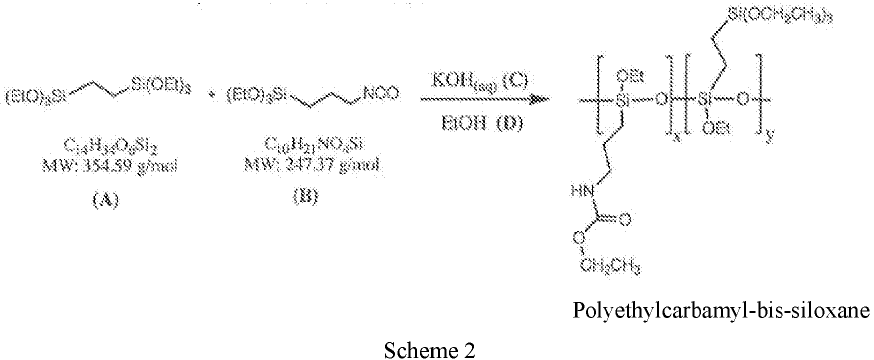

### Material

A: 1,2-bis(triethoxysilyl)ethane (Gelest SIB 1817.0, CAS: 16068-37-4); B: 3-isocyanatopropyl triethoxysilane (Gelest SII 6455.00, CAS: 24801-88-5); C: potassium hydroxide (Sigma Aldrich P1767, CAS: 1310-58-3) in DI Water; D: ethanol (Alfa Aesar 33361, 94-96%, CAS: 64-17-5; E: dichlormethane (Alfa Aesar 22917, CAS: 75-09-2)

### Procedure

As generally depicted in the above Scheme 2, in a 100 mL single neck RBF equipped with a stir bar, an amount of 10.16 g (0.041 moles) of 3-isocyanatopropyl triethoxysilane (B), an amount of 1.04 g (2.93 mmoles) of 1,2-Bis(triethoxysilyl)ethane (A), and 20 mL of Ethanol (D) were charged and the reaction mixture was stirred for 10 min. 2 mL of aqueous KOH (C) (10mg/mL) was charged into the reaction mixture dropwise and the reaction was stirred at ambient temperature for 15 hours. Then, the reaction mixture was transferred to a 100 mL separatory funnel and 20mL of dichloromethane was charged. Water was added to the reaction and washed twice. Organic phase was separated and dried using sodium sulfate. The solvent was removed *in vacuo* and an amount of 9.5g of a waxy solid product was obtained.

### Example 2: Synthesis of Tris-CoPolymer

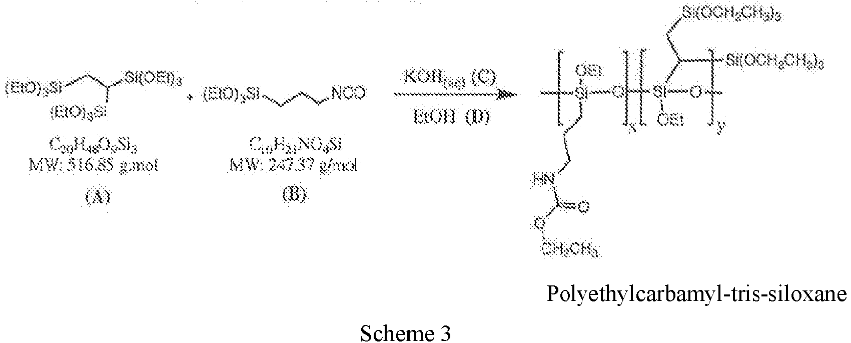

### Material

A: 1,1,2-Tris(triethoxysilyl)ethane (Gelest SIT8716.6, CAS: 151198-82-2); B: 3-isocyanatopropyl triethoxysilane (Gelest SII 6455.00, CAS: 24801-88-5); C: potassium hydroxide (Sigma Aldrich P1767, CAS: 1310-58-3) in DI Water; D: ethanol (Alfa Aesar 33361, 94-96%, CAS: 64-17-5; E: dichlormethane (Alfa Aesar 22917, CAS: 75-09-2)

### Procedure

As generally depicted in the above Scheme 3, in a 1 L single neck RBF equipped with a stir bar and dropping funnel, an amount of 195 g (0.788 moles) of 3-isocyanatopropyl triethoxysilane (B), an amount of 19.4 g (0.0375 moles) of 1,1,2-tris(triethoxysilyl)ethane (A), and 310 mL of ethanol (D)were charged and the reaction mixture was stirred for 15 min. 38 mL of aqueous KOH (C) (10mg/mL) was charged into the reaction mixture dropwise and the reaction was stirred at ambient temperature for 15 hours. Then, a half of the reaction mixture was transferred to a 500 mL separatory funnel and 200 mL of dichloromethane was charged. The reaction was washed twice with water. Organic phase was separated and dried using sodium sulfate. The solvent was removed *in vacuo.* The other half of the reaction mixture was washed and separated likewise. 207g of a waxy solid product was obtained. The polyethylcarbamyl-bis-siloxane product provided the following NMR spectra and elemental analyses:
¹H NMR (CDCl3, 500 MHz): § 0.54-0.57 (m), 0.59 (m), 1.12-1.16 (m), 1.49-1.54 (m), 3.06-3.09 (m), 3.71-3.76 (m), 4.85 b(s, br). ¹³C NMR (CDCl₃, 125.7 MHz): § 1.43, 7.52, 1456, 18.15, 18.20, 18.29, 23.61, 42.82, 58.24, 58.31, 58.35, 158.42. ²⁹Si NMR (CDCl₃, 99.3 MHz) § -45.42. Calcd for C₁₈H₄₁NO₉Si₃: C, 43.08; H, 8.64; N, 2.79. Found: C, 47.06; H, 9.28; N, 5.57. Mn [g/mol]: 582, Mw [g/mol]: 1095.

### EXAMPLE 3: Preparation and use of a coating composition

A coating composition was prepared containing the following materials in the specified amounts:
1. Siloxane of tri-copolymer of Example 2: 0.4 grams
2. 2-hydroxyethylmethacrylate: 0.5 grams
3. 2-hydroxy-2-methylpropiophenone: 0.05 grams
4. 1,6-hexanediol diacrylate: 0.05 grams

These materials were admixed in a vial and ultrasonicated for 10 minutes. The composition is considered solvent free because individual components are miscible with each other without assistance of a further solvent. The composition was air-sprayed at 30 psi to cPI (co-polymerized imide, KOLON CPI^{™}) films without dilution. The applied composition coating layer was UV-cured for 2 minutes (400 Watts).

### EXAMPLE 4: Adhesion testing

Adhesion of the cured coating composition of Example 4 above was assessed by ASTM D3359 "Standard test methods for rating adhesion by tape test".

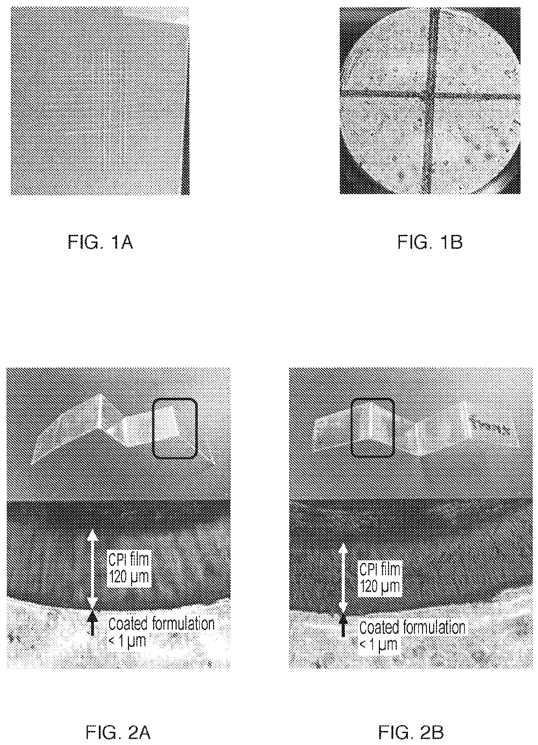

The coated composition layer was immersed in hot water (80 °C) for 30 minutes and taken out of water. The surface was gently wiped with Kimwipes to remove water. Using sharp serrated razor blades with 1mm width, incisions were made vertically to intersect each other (FIG. 1A). 20 mm wide semitransparent pressure sensitive tape was applied on the incision area. Tape was removed from the surface. The surface was inspected visually and assessed based upon the classification of adhesion test results (see Table 1).

As shown in FIGS. 1A-1B, no marginal delamination or defect was observed along the cuts. Adhesion of the coating layer was classified as 5B (0% or none of failure, see table 1). Even after microscopic examination (50 times magnification), no microscopic failure or defect along the cuts was confirmed.

In general, ISO or ASTM categorizes the coating failure into 5 classes (0 to 5). The film was rated as 0 out of 5 or ASTM class 5B, which means no of failure observed during cross cut.

**Table 1. Classification of adhesion test results**

| Classification of adhesion test results | | | | | | |
|---|---|---|---|---|---|---|
| Classification | 5B | 4B | 3B | 2B | 1B | 0B |
| Percent area removed | 0% None | 5%> | 5-15% | 15-35% | 35-65% | 65%< |

### EXAMPLE 5: Static bending test

A cured composition coating layer was prepared on a CPI (polyimide) substrate as described in Example 3 above.

The coated specimens were folded at 180° (i.e. folded in half) multiple times. The diameter of the specimen was measured using calipers. The diameter was approximately 1 mm. Each specimen was stored at different conditions at a temperature of 70°C for 10 days and at a temperature of -40 °C for 3 days, respectively.

After test, the surfaces of each specimen were examined visually and microscopically. Insets of FIGS. 2A-2B show that cross-sectional views of interlayers of CPI film and coating. Thicknesses of the CPI film substrate and the cured composition coating layer were 120 µm and < 1 µm, respectively. No specific delamination or cracking was observed at the boundary of two films.

### EXAMPLE 6: Pencil hardness test (ASTM D3363)

Hardness of a cured composition coating layer was assessed by using ASTM D3363 Standard test method.

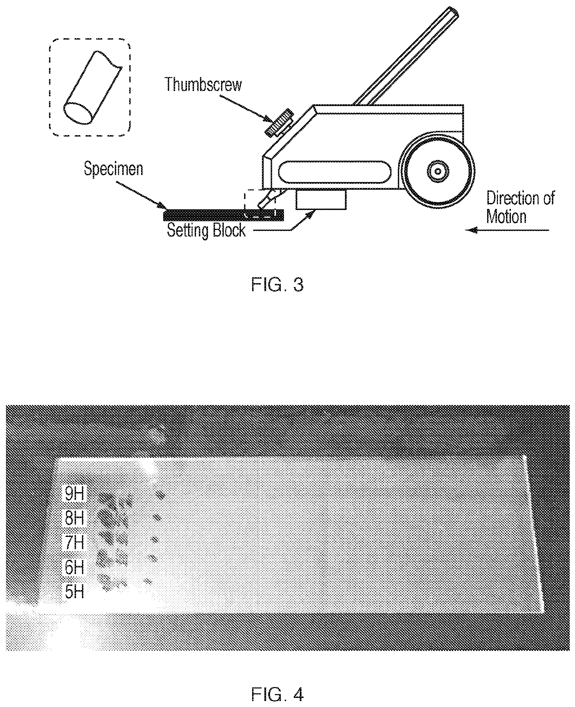

Prior to the test, the pencil was sharpened by the special pencil sharpener supplied from BYK. The hardness of pencils was varied from 6B (soft) to 8H (hard). The lead was sharpened until approximately 5mm to 6 mm. The lead was rubbed to the abrasive paper (400 grit) at a temperature of 90 °C until a flat, smooth, and circular cross-section was achieved. The pencil tester was set as shown in FIG. 3. When the specimen was placed under the tip of pencil, the push force was applied. The speed of the pencil tester was between 0.5 mm/s to 1 mm/s. The surface of the specimen was inspected visually to check scratches or gouges.

The specimen prepared by aforementioned formulation (Tris-carbamate POSS: hydroxyethyl methacrylate: photo-initiator: diacrylate = 0.4g:0.5g:0.05g:0.05g) was confirmed 6H hardness. In order to improve the hardness, the formulation was modified as shown below:
By the procedures described in Example 3 above, a coating composition was prepared containing the following materials in the specified amounts:
1. Siloxane of tri-copolymer of Example 2: 0.6 grams
2. 2-hydroxyethylmethacrylate: 0.7 grams
3. 2-hydroxy-2-methylpropiophenone: 0.01 grams
4. 1,6-hexanediol diacrylate: 0.01 grams

The pencil hardness test was carried out as described above. As shown in FIG. 4, the hardness was checked from 5H to 9H. No gouges or scratches was seen on the glass specimen coated with aforementioned formulation. The hardness of the specimen was confirmed 9H or more.

### EXAMPLES 7-10: Antimicrobial compositions and testing

### Example 7: Antimicrobial composition

A coating composition was prepared containing the following materials as follows:
1) Siloxane of bis-copolymer of Example 1
2) 2-hydroxyethylmethacrylate
3) Dipentaerythritol penta-/hexa-acrylate
4) 1,6-hexanediol diacrylate
5) Omnirad 184 photointiator (IGM)
6) Polyether-modified silicone-based surface agent (BYK-307, BYK Chemie)

These six components were admixed at a relative weight percent of 30:20:20:16:3:1. To that mixture, AEM5772 (Micrboan) antimicrobial additive was added in an amount of 0.5 weight percent based on weight of the admixture. These materials were ultrasonicated for about 10 minutes. The composition is considered solvent free because individual components are miscible with each other without assistance of a further solvent.

The composition was air-sprayed onto a polycarbonate phone cases using an air spray gun. The coated phone case was UV-cured.

### Example 8: Additional antimicrobial composition

A coating composition was prepared containing the following materials as follows:
1) Siloxane of bis-copolymer of Example 1
2) 2-hydroxyethylmethacrylate
3) 1,6-hexanediol diacrylate
4) Omnirad 184 photointiator (IGM)
5) Polyether-modified silicone-based surface agent (BYK-307, BYK Chemie)

These five components were admixed at a relative weight percent of 35:45:9:10:1. To that mixture, AEM5772 (Micrboan) antimicrobial additive was added in an amount of 0.5 weight percent based on weight of the admixture. These materials were ultrasonicated for about 10 minutes. The composition is considered solvent free because individual components are miscible with each other without assistance of a further solvent.

The composition was air-sprayed onto a polycarbonate phone cases using an air spray gun. The coated phone case was UV-cured.

### Example 9: Additional antimicrobial composition

A coating composition was prepared containing the following materials as follows:
1) Siloxane of bis-copolymer of Example 1
2) 2-hydroxyethylmethacrylate
3) 1,6-hexanediol diacrylate
4) Omnirad 184 photointiator (IGM)

These four components were admixed at a relative weight percent of 35:45:10:10. To that mixture, inorganic silver nanoparticles (silver (Ag) nanopowder /nanoparticles (Ag, 99.99%, 30-50 nm, w/~0.2 wt% PVP Coated- available from U.S. Research Nanomaterials, Houston, Texas) antimicrobial additive was added in an amount of 0.5 weight percent based on weight of the admixture. These materials were ultrasonicated for about 10 minutes. The composition is considered solvent free because individual components are miscible with each other without assistance of a further solvent.

The composition was air-sprayed onto a polycarbonate phone cases using an air spray gun. The coated phone case was UV-cured.

### Example 10: Antimicrobial testing

The coated phone cases produced in Examples 7 and 9 above were tested under the ISO 22196 which is a recognized method of evaluating the antibacterial activity of antibacterial-treated plastics, and other non-porous, surfaces of products.

Results of the ISO 22196 test are set forth in the following Table 2, which shows excellent results (97-99%) with differing test bacterium.

**Table 2. Antimicrobial test results using ISO22196**

| Formulations | Test Method | Test bacterium | Bacterial reduction |
|---|---|---|---|
| Example 7 | ISO 22196 | S. Aureus | 96.71% |
| | | E. Coli | 99.70% |
| Example 9 | | S. Aureus | 98.90% |
| | | E. Coli | 99.82% |

### EXAMPLES 11-14: Colorant compositions and testing

### Example 11: Colored (silver) composition

A coating composition was prepared containing the following materials as follows:
1) Siloxane of tri-copolymer of Example 1
2) 2-hydroxyethylmethacrylate
3) 1,6-hexanediol diacrylate
4) Omnirad 184 photointiator (IGM)

These four components were admixed at a relative weight percent of 40:50:5:5. To that mixture, inorganic silver nanoparticles (silver (Ag) nanopowder /nanoparticles (Ag, 99.99%, 30-50 nm, w/~0.2 wt% PVP Coated- available from U.S. Research Nanomaterials, Houston, Texas) antimicrobial additive was added in an amount of 0.5 weight percent based on weight of the admixture. These materials were ultrasonicated for about 10 minutes. The composition is considered solvent free because individual components are miscible with each other without assistance of a further solvent.

The composition was air-sprayed onto a silicon watch wrist band. The coated wrist band was UV-cured. No delamination or coating failure was observed over extended time with this composition that contained an inorganic colorant.

### Example 12: Additional colored (red) composition

A coating composition was prepared containing the following materials as follows:
1) Siloxane of tri-copolymer of Example 1
2) 2-hydroxyethylmethacrylate
3) 1,6-hexanediol diacrylate
4) Omnirad 184 photointiator (IGM)

These four components were admixed at a relative weight percent of 40:50:5:5. To that mixture, a commercially available organic red colorant was added in an amount of 50 weight percent based on weight of the admixture. These materials were ultrasonicated for about 10 minutes. The composition is considered solvent free because individual components are miscible with each other without assistance of a further solvent.

The composition was air-sprayed onto a nylon watch wrist band. The coated wrist band was UV-cured. A logo on the watch band was not peeled off or delaminated during extreme bending and twisting treatment.

### Example 13: Additional colored (fluorescent) composition

A coating composition was prepared containing the following materials as follows:
1) Siloxane of tri-copolymer of Example 1
2) 2-hydroxyethylmethacrylate
3) 1,6-hexanediol diacrylate
4) Omnirad 184 photointiator (IGM)

These four components were admixed at a relative weight percent of 40:50:5:5. To that mixture, a commercially available fluorescent dye was added in an amount of 5 weight percent based on weight of the admixture. These materials were ultrasonicated for about 10 minutes. The composition is considered solvent free because individual components are miscible with each other without assistance of a further solvent.

The composition was air-sprayed onto a nylon watch wrist band. The coated wrist band was UV-cured.

### Example 14:

The fluorescent composition of Example 13 was sprayed onto a leather swatch. The spray-applied coating was conformal and evenly applied over the swatch surface. There was no significant difference noted between coated and uncoated areas of the swatch. Under UV illumination (365 nm), the coated swatch showed blue fluorescence whereas uncoated areas were not illuminated at 365 nm.

## Claims

1. A coated substrate comprising:
a substrate;
a coating composition on the substrate, the coating composition comprising:
(i) one or more organosilanes comprising one or more siloxanes, and/or one or more silsesquioxanes, wherein the one or more organosilanes comprise units of the following Formulae (I) and/or (II): 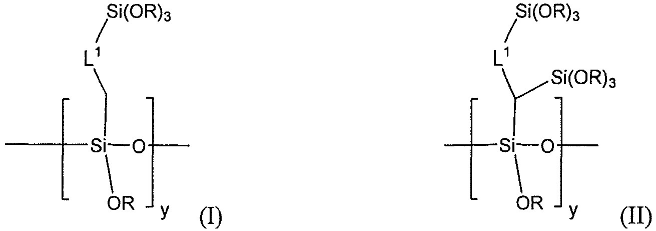 wherein in each of those Formulae (I) and (II), L¹ is a linker; each R is independently a hydrogen or non-hydrogen substituent; and each y is a positive integer; and
(ii) one or more compounds comprising a substituted acrylate moiety, a substituted acrylamide moiety or a substituted vinyl ether moiety.

2. The substrate of claim 1 wherein the coating composition further comprises a curing agent.

3. The substrate of claim 1 wherein the coating composition further comprises a photoactive agent.

4. The substrate of any one of claims 1 through 3 wherein the coating composition comprises one or more hydroxyl acrylate compounds.

5. The substrate of any one of claims 1 through 4 wherein the coating composition comprises 1) one or more compounds comprising a single acrylate moiety and 2) one or more multi-acrylate compounds.

6. The substrate of any one of claims 1 through 5 wherein the one or more organosilanes comprise one or more carbamate groups.

7. The substrate of any one of claims 1 through 6 wherein the one or more organosilanes comprises units of the following Formula III: 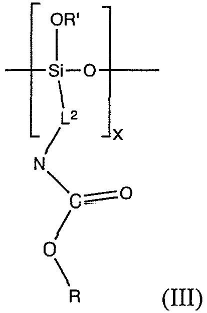 wherein in Formula (III): each R and R¹ are the same or different and may be a hydrogen or non-hydrogen substituent; L² is a linker group; and x is a positive integer.

8. A method for providing a coated substrate, comprising:
applying a layer of a coating composition on the substrate,
wherein the coating composition comprises:
(i) one or more organosilanes comprising one or more siloxanes, and/or one or more silsesquioxanes, wherein the one or more organosilanes comprise units of the following Formulae (I) and/or (II): 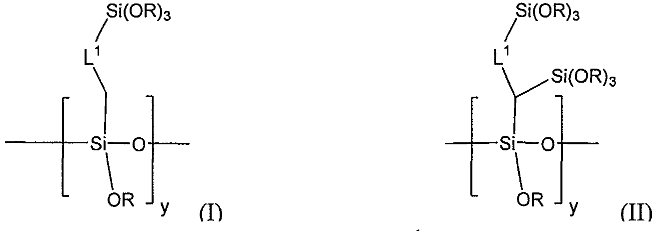 wherein in each of those Formulae (I) and (II), L¹ is a linker; each R is independently a hydrogen or non-hydrogen substituent; and each y is a positive integer; and
(ii) one or more compounds comprising a substituted acrylate moiety, a substituted acrylamide moiety or a substituted vinyl ether moiety.

9. The method of claim 8 further comprising hardening the applied coating layer.

10. A curable coating composition, comprising:
(i) one or more organosilanes comprising one or more siloxanes, and/or one or more silsesquioxanes, wherein the one or more organosilanes comprise units of the following Formulae (I) and/or (II): 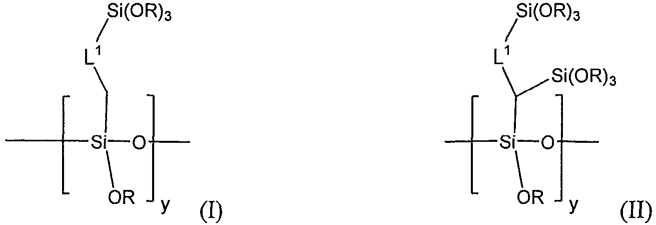 wherein in each of those Formulae (I) and (II), L¹ is a linker; each R is independently a hydrogen or non-hydrogen substituent; and each y is a positive integer; and
(ii) one or more compounds comprising a substituted acrylate moiety, a substituted acrylamide moiety or a substituted vinyl ether moiety.

## Patentansprüche

1. Ein beschichtetes Substrat, das Folgendes aufweist:
ein Substrat;
eine Beschichtungszusammensetzung auf dem Substrat, wobei die Beschichtungszusammensetzung Folgendes aufweist:
(i) ein oder mehrere Organosilane, die ein oder mehrere Siloxane und/oder ein oder mehrere Silsesquioxane aufweisen, wobei die ein oder mehreren Organosilane Bestandteile der folgenden Formeln (I) und/oder (II) aufweisen: 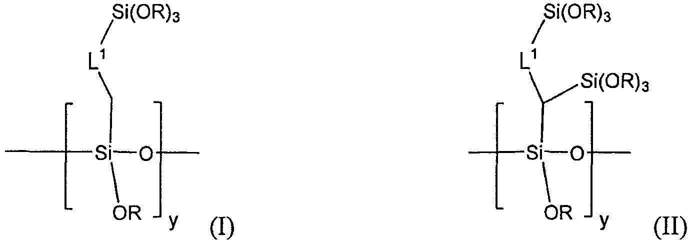 wobei in jeder dieser Formeln (I) und (II) L¹ ein Verbinder ist; jedes R unabhängig ein Wasserstoff- oder Nicht-Wasserstoff-Substituent ist; und jedes y eine positive ganze Zahl ist; und
(ii) eine oder mehrere Verbindungen, die einen substituierten Acrylatgruppe, eine substituierte Acrylamidgruppe oder eine substituierte Vinylethergruppe aufweisen.

2. Das Substrat nach Anspruch 1, wobei die Beschichtungszusammensetzung ferner ein Härtungsmittel aufweist.

3. Das Substrat nach Anspruch 1, wobei die Beschichtungszusammensetzung ferner ein photoaktives Mittel aufweist.

4. Das Substrat nach einem der Ansprüche 1 bis 3, wobei die
Beschichtungszusammensetzung eine oder mehrere Hydroxylacrylatverbindungen aufweist.

5. Das Substrat nach einem der Ansprüche 1 bis 4, wobei die
Beschichtungszusammensetzung 1) eine oder mehrere Verbindungen, die eine einzelne Acrylatgruppe aufweisen, und 2) eine oder mehrere Multi-Acrylatverbindungen aufweist.

6. Das Substrat nach einem der Ansprüche 1 bis 5, wobei die ein oder mehreren Organosilane eine oder mehrere Carbamatgruppen aufweisen.

7. Das Substrat nach einem der Ansprüche 1 bis 6, wobei die ein oder mehreren Organosilane Bestandteile der folgenden Formel III aufweisen: 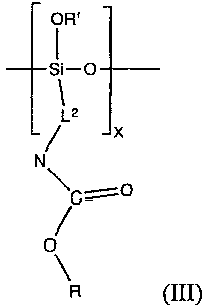 wobei in Formel (III): jedes R und R' gleich oder verschieden sind und ein Wasserstoff- oder Nicht-Wasserstoff-Substituent sein können; L² eine Verbindergruppe ist; und x eine positive ganze Zahl ist.

8. Ein Verfahren zum Bereitstellen eines beschichteten Substrats, aufweisend:
Aufbringen einer Schicht einer Beschichtungszusammensetzung auf das Substrat, wobei die Beschichtungszusammensetzung Folgendes aufweist:
(i) ein oder mehrere Organosilane, die ein oder mehrere Siloxane und/oder ein oder mehrere Silsesquioxane aufweisen, wobei die ein oder mehreren Organosilane Bestandteile der folgenden Formeln (I) und/oder (II) aufweisen: 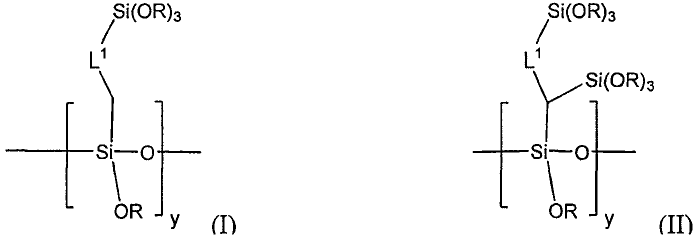 wobei in jeder dieser Formeln (I) und (II) L¹ ein Verbinder ist; jedes R unabhängig ein Wasserstoff- oder Nicht-Wasserstoff-Substituent ist; und jedes y eine positive ganze Zahl ist; und
(ii) eine oder mehrere Verbindungen, die eine substituierte Acrylatgruppe, eine substituierte Acrylamidgruppe oder eine substituierte Vinylethergruppe aufweisen.

9. Das Verfahren nach Anspruch 8, ferner aufweisend das Härten der aufgebrachten Beschichtungsschicht.

10. Eine härtbare Beschichtungszusammensetzung, aufweisend:
(i) ein oder mehrere Organosilane, die ein oder mehrere Siloxane und/oder ein oder mehrere Silsesquioxane aufweisen, wobei die ein oder mehreren Organosilane Bestandteile der folgenden Formeln (I) und/oder (II) aufweisen: 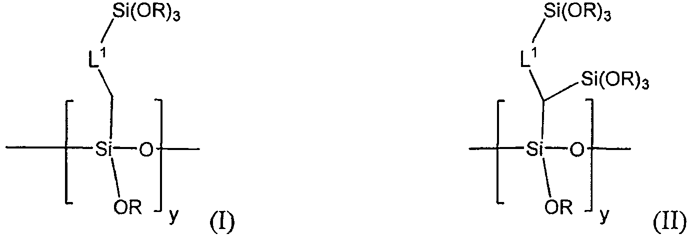 wobei in jeder dieser Formeln (I) und (II) L¹ ein Verbinder ist; jedes R unabhängig ein Wasserstoff- oder Nicht-Wasserstoff-Substituent ist; und jedes y eine positive ganze Zahl ist; und
(ii) eine oder mehrere Verbindungen, die eine substituierte Acrylatgruppe, eine substituierte Acrylamidgruppe oder eine substituierte Vinylethergruppe aufweisen.

## Revendications

1. Substrat revêtu comprenant :
un substrat ;
une composition de revêtement sur le substrat, la composition de revêtement comprenant :
(i) un ou plusieurs organosilanes comprenant un ou plusieurs siloxanes, et/ou un ou plusieurs silsesquioxanes, dans lequel le ou les organosilanes comprennent des motifs des formules (I) et/ou (II) suivantes : 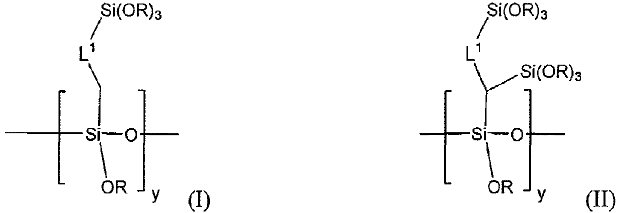 dans lequel dans chacune de ces formules (I) et (II), L¹ est un groupe de liaison ; chaque R est indépendamment un substituant hydrogène ou non hydrogène ; et chaque y est un entier positif ; et
(ii) un ou plusieurs composés comprenant un groupement acrylate substitué, un groupement acrylamide substitué ou un groupement éther vinylique substitué.

2. Substrat selon la revendication 1, dans lequel la composition de revêtement comprend en outre un agent de durcissement.

3. Substrat selon la revendication 1, dans lequel la composition de revêtement comprend en outre un agent photoactif.

4. Substrat selon l'une quelconque des revendications 1 à 3, dans lequel la composition de revêtement comprend un ou plusieurs composés hydroxyacrylates.

5. Substrat selon l'une quelconque des revendications 1 à 4, dans lequel la composition de revêtement comprend 1) un ou plusieurs composés comprenant un seul groupement acrylate et 2) un ou plusieurs composés multi-acrylates.

6. Substrat selon l'une quelconque des revendications 1 à 5, dans lequel le ou les organosilanes comprennent un ou plusieurs groupes carbamate.

7. Substrat selon l'une quelconque des revendications 1 à 6, dans lequel le ou les organosilanes comprennent des motifs de la formule III suivante : 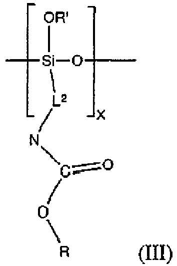 dans lequel dans la formule (III): chaque R et R¹ sont identiques ou différents et peuvent être un substituant hydrogène ou non hydrogène ; L² est un groupe de liaison ; et x est un entier positif.

8. Procédé pour fournir un substrat revêtu, comprenant :
l'application d'une couche d'une composition de revêtement sur le substrat,
dans lequel la composition de revêtement comprend :
(i) un ou plusieurs organosilanes comprenant un ou plusieurs siloxanes, et/ou un ou plusieurs silsesquioxanes, dans lequel le ou les organosilanes comprennent des motifs des formules (I) et/ou (II) suivantes : 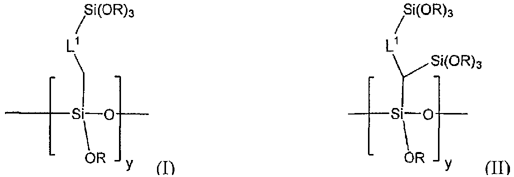 dans lequel dans chacune de ces formules (I) et (II), L¹ est un groupe de liaison ; chaque R est indépendamment un substituant hydrogène ou non hydrogène ; et chaque y est un entier positif ; et
(ii) un ou plusieurs composés comprenant un groupement acrylate substitué, un groupement acrylamide substitué ou un groupement éther vinylique substitué.

9. Procédé selon la revendication 8 comprenant en outre le durcissement de la couche de revêtement appliquée.

10. Composition de revêtement durcissable, comprenant :
(i) un ou plusieurs organosilanes comprenant un ou plusieurs siloxanes, et/ou un ou plusieurs silsesquioxanes, dans lequel le ou les organosilanes comprennent des motifs des formules (I) et/ou (II) suivantes : 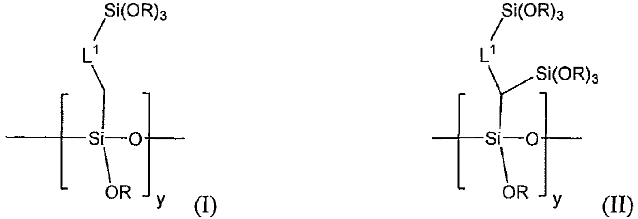 dans lequel dans chacune de ces formules (I) et (II), L¹ est un groupe de liaison ; chaque R est indépendamment un substituant hydrogène ou non hydrogène ; et chaque y est un entier positif ; et
(ii) un ou plusieurs composés comprenant un groupement acrylate substitué, un groupement acrylamide substitué ou un groupement éther vinylique substitué.
